# EUROPEAN PATENT SPECIFICATION

(11) **EP 2 434 141 B1**
(45) Date of publication and mention of the grant of the patent: **28.10.2015**
(21) Application number: 10179277.8
(22) Date of filing: 24.09.2010
(51) Int. Cl.: F03D 1/00, B66F 3/46, B66F 7/22

(54) **Wind turbine component handling apparatus**
Vorrichtung zur Handhabung eines Windturbinenbauteils
Appareil de manipulation de composant d'éolienne

(43) Date of publication of application: 28.03.2012
(73) Proprietor: Siemens Aktiengesellschaft, 80333 München (DE)
(72) Inventor: Tehrani, Ashkan Vaziri, 8000 Aarhus (DK)

(56) References cited:
- EP-A1- 2 140 967
- EP-A2- 2 226 496
- WO-A1-2008/132226
- GB-A- 2 394 498
- US-A- 4 715 775
- US-A1- 2009 196 748

## Description

The invention describes a wind turbine component handling apparatus for rotating the yaw bedplate during production of a wind turbine; a wind turbine manufacturing system; and a method for handling a yaw bedplate.

The assembly of a wind turbine can be simplified to some extent by using custom devices for mounting certain components of the wind turbine. For example, WO 2008/132226 A1 describes an elevator device for raising a rotor blade along the tower of the wind turbine so that it can be connected to the hub. US 2009/0196748 A1 describes an elevator device for raising an entire hub and rotor blade assembly along the tower of the wind turbine so that it can be connected to another rotor arm. EP 2 140 967 A1 describes a holding and turning apparatus for slowly rotating a partially assembled sheet metal nacelle, so that a welding procedure can be completed.

A standard wind turbine generally comprises a vertical tower supporting the nacelle. The nacelle supports a rotor having a horizontal rotation axis and a plurality of rotor blades. The nacelle can be rotated with respect to the tower by the so-called yaw drive about the vertical axis, which is also called yaw axis. The yaw drive is used to rotate the nacelle and thus the rotor such that the horizontal rotation axis of the rotor has the correct orientation with respect to the direction of the wind, i.e. the horizontal rotation axis of the rotor is generally essentially arranged parallel to the direction of the wind.

More information about the yaw system of a wind turbine is provided by Windkraftanlagen, Robert Gasch and Jochen Twele Eds., 6th edition 2010, Vieweg+Teubner.

It is to be understood that the yaw system has to support the weight of the nacelle and has to act against the pressure of the wind applied to the rotor. Thus, the yaw system and a bedplate of the yaw system have to accommodate high forces and these components are thus heavy and bulky.

During the manufacturing process of the wind turbine, components have to be mounted on both sides of the yaw bedplate. Since the bottom of the yaw bedplate is not fully accessible during manufacturing, the yaw bedplate has to be turned upside down. It is to be noted that such turning process has to comply with high safety standards due to the size and mass of the yaw bedplate.

In a prior art manufacturing process a crane is used to turn the bedplate. Jack rings are screwed to the bedplate. A crane hook is attached to the jack ring at one end of the bedplate. The bedplate is lifted on said one end into an upright position. On the opposite side of the first jack ring a second jack ring is attached, wherein the second crane hook engages the second jack ring. The second crane hook is used to turn the bedplate upside down. Thereafter, the yaw bedplate is lowered to its original position. In another prior art technique described in EP 2 226 496 A2, a rotatable holding frame is bolted to a component such as a rotor blade bearing. The rotatable holding frame is held in a carrying frame, which in turn is suspended from a crane using a rope or chain. The rotor blade bearing can be turned by means of the rotatable holding frame. Due to safety standards, such a turning process requires considerable space. Moreover, such a turning process requires an operator operating the cranes and attaching the hooks or bolts. Particularly, due to the attaching of the hooks or bolts and the operation of the crane, such a turning process is time-consuming.

It is therefore an object of the invention to provide an apparatus and a method for turning a wind turbine component which avoids the problems outlined above.

The object of the present invention is achieved by a wind turbine component handling apparatus according to claim 1 and a method for handling a yaw bedplateaccording to claim 11.

The present invention is directed to an apparatus and a method of handling and/or rotating a yaw bedplate. The yaw bedplate may have a mass of preferably more than 10 kg, preferably more than 50 kg, more preferably more than 100 kg, more preferably more than 250 kg, more preferably more than 500 kg, most preferably more than 1000 kg. In the following, the terms "yaw bedplate" and "wind turbine component" have the same meaning and are used interchangeably.

The wind turbine component handling apparatus according to the invention is adapted to rotate a yaw bedplate during manufacturing the wind turbine. The yaw bedplate is part of the supporting structure of the wind turbine. The apparatus comprises a docking device that is realized to be movable essentially horizontally relative to the yaw bedplate and to grip the yaw bedplate. Gripping the wind turbine component can be interpreted as grasping, clamping, holding and the like. The wind turbine component handling apparatus further comprises a lifting device realized to essentially vertically lift the wind turbine component in the upward direction. The wind turbine component handling apparatus comprises a turning device adapted to rotate the wind turbine component essentially about a horizontal axis, which turning device is mounted on the lifting device. The docking device may be moved pneumatically, hydraulically or by an electric motor to and from the yaw bedplate. When the docking device is moved to the yaw bedplate, the docking device may engage the yaw bedplate and thus grip the yaw bedplate. The lifting device may lift the wind turbine component in the vertical direction by a pneumatical, hydraulic or electric drive. Further, the turning device may comprise a hydraulic, pneumatic or electric drive in order to rotate the wind turbine component. After the wind turbine component handling apparatus has rotated the yaw bedplate upside down, the yaw bedplate may be lowered or lift down by the lifting device essentially to its original position and original vertical position, respectively.

Since the wind turbine component is held by the docking device, lifted up and turned upside down and lowered, the wind turbine component handling apparatus needs significantly less space as compared to handling the yaw bedplate by the crane. Further thereto, the wind turbine component is held by the docking device and accordingly the present invention offers a higher security as compared to turning the yaw bedplate upside down using the crane. Further, in an automatic operation mode the wind turbine component handling apparatus does not require any interaction with the operator when moving the docking device to the wind turbine component in order to grip the same, when vertically lifting the wind turbine component in the upward direction, when turning the wind turbine component about a horizontal axis and when lowering the wind turbine component to its original vertical position. However, in a semi-automatic or manual operation mode the operator may control the operation of the wind turbine handling apparatus. Accordingly, the wind turbine component handling apparatus is more efficient than a method using a crane for turning the yaw bedplate upside down. Further, the wind turbine component handling apparatus offers a higher level of security as compared to the above-mentioned use of a crane, since the wind turbine component is held by the docking device and thus cannot fall off the wind turbine component handling apparatus.

The docking device may engage the wind turbine component, such as by clamping, force closure, positive locking and the like. The wind turbine component may comprise features which are complementary with features provided at the docking device in order that the docking device may engage the wind turbine component. The features of the wind turbine component that engage the complementary features of the docking device may be releasably coupled with the wind turbine component during the production of the wind turbine, particularly for rotating the wind turbine component, such as a yaw bedplate. Particularly advantageous embodiments and features of the invention are given by the dependent claims, as revealed in the following description.

The wind turbine component handling device may be controlled by a controller. The controller may instruct the docking device to move essentially horizontally to the wind turbine component in order to engage the wind turbine component. The controller may instruct the lifting device to lift the wind turbine component essentially vertically in the upward direction. Further, the controller may instruct the turning device to rotate the wind turbine component essentially about a horizontal axis.

Thus, the operation of the wind turbine component handling apparatus is controlled in an automatic operation mode by the controller and no operator interaction is needed for turning the wind turbine component. However, in a semi-automatic or manual operation mode the operator may control the operation of the wind turbine handling apparatus.

The docking device may be adapted to be positioned at opposite sides of the wind turbine component. The docking device may comprise two beams realized to be positioned at opposite sides of the wind turbine component, wherein each beam comprises at least one engaging portion adapted to engage a complementary engaging portion of the wind turbine component or of an auxiliary structure coupled to the wind turbine component. Since the beams grip the wind turbine component from opposite sides, the wind turbine component is held in a stable state. The wind turbine component may comprise a protrusion which engages the at least one opening of the beam. In the alternative, an auxiliary structure may be coupled to the wind turbine component that engages the at least one opening in the beam. The auxiliary structure coupled to the wind turbine component may be a pin which is screwed into the wind turbine component during manufacturing and which protrudes from the wind turbine component. The wind turbine component may comprise two openings at the first side and two openings at a second side opposite to the first side in which the pins are screwed. Each beam may comprise two openings that engage the respective pin screwed into the wind turbine component. Thereby, the wind turbine component can be held securely by the docking device.

The at least one opening may comprise an oval shape. Thereby, particularly position tolerances of the wind turbine component may be accommodated. The diameter of the opening may be larger than the diameter of the pin in order to ensure that the opening may by moved over the pin and in order to accommodate tolerances.

The turning device may be adapted to rotate the docking device and the wind turbine component coupled thereto about a horizontal axis. The turning device may rotate the beams and the wind turbine component coupled thereto about a horizontal axis. The lifting device may be realized to lift the docking device, such as the beams, and the wind turbine component coupled thereto in the vertical direction. The docking device, such as the beams, may be mounted on the turning device.

As mentioned before, each beam may comprise at least two openings which are adapted to engage the pin coupled to the wind turbine component in order to grip the wind turbine component in a fixed position with respect to the docking device. Each beam may comprise at least one spacer, which is arranged on a wall of the beam that is directed to the wind turbine component. The spacer acts as a stop when the beam is moved in the horizontal direction to the wind turbine component. The spacer can ensure that the opening of the beam is positioned around the pin such that the pin is arranged in the opening. The spacer may comprise a sensor indicating that the spacer contacts the wind turbine component and thus indicating that the pin is positioned within the opening.

The invention also describes a wind turbine manufacturing system comprising the above-mentioned wind turbine component turning system and a support apparatus having at least one, preferably three or four, cradle or fork elements, wherein the auxiliary structure, i.e. preferably a pin, is positioned in a respective cradle or fork element and wherein each auxiliary structure is coupled with the wind turbine component. The wind turbine component may comprise openings in which the pins are screwed. The support apparatus may preferably comprise four cradle elements and preferably four pins are used, which are screwed preferably in two opposing sides of the wind turbine component. Thereby the wind turbine component is securely positioned in the support apparatus during manufacturing.

The support apparatus may be realized to be moved from one manufacturing station to the next manufacturing station. This allows that the same auxiliary structure, i.e. the pins, are used during a plurality of manufacturing steps. If the yaw bedplate is turned upside down using a crane in a state of the art method it is required to screw jack rings in the openings. However, the jack rings can only be used during turning the yaw bedplate by the crane, and cannot be used during other manufacturing steps.

The invention also describes a method of handling a wind turbine component, which wind turbine component is part of the supporting structure of a wind turbine, comprising the following steps: gripping the wind turbine component by docking device which docking device is realized to be essentially horizontally movable relative to the wind turbine component; lifting the wind turbine component by a lifting device realized to essentially vertically lift the wind turbine component; and rotating the wind turbine component essentially about a horizontal axis by a turning device mounted on the lifting device. The method may be performed by the apparatus mentioned above. Rotating may include turning, tilting and/or flipping. Lifting the wind turbine component may include lifting up the wind turbine component from a support structure. After lifting the wind turbine component up and rotating the same, the wind turbine component may be lifted down to the support structure.

The method may comprise the following steps: mounting a plurality, preferably three or four, pins on the wind turbine component, positioning the wind turbine component on a support apparatus such that each pin rests in a cradle element of the support apparatus, and pushing a docking device essentially in the horizontal direction such that openings in the docking device engage the pins in the wind turbine component. The method further comprises the steps of essentially vertically lifting the docking device, wherein the wind turbine component is lifted by the pins mounted at the wind turbine component, and rotating the docking device essentially about a horizontal axis, wherein the wind turbine component is essentially turned about the horizontal axis by pins mounted at the wind turbine component. Finally, the docking device is lowered or lift down until the pins mounted at the wind turbine component rest in the respective one of the cradle elements of the support apparatus.

The method may comprise similar features as revealed above in the context with the yaw handling apparatus and the wind turbine manufacturing system.

All objects and features of the present invention will become apparent from the following detailed description considered in conjunction with the accompanying drawings. It is to be understood, however that the drawings are designed solely for the purpose of illustration and not as a definition of the limits of the invention.

The invention will now be explained by an exemplary yaw turning apparatus. However, it is to be noted that the invention is not limited to a yaw turning apparatus, but can be applied for turning any component of a wind turbine.
Fig. 1 shows a perspective view of the yaw turning apparatus in its initial position;
Fig. 2 shows the yaw turning apparatus after a yaw bedplate has been moved to the yaw turning apparatus;
Fig. 3 shows the yaw turning apparatus after the docking device has been moved to the yaw bedplate;
Fig. 4 shows the yaw turning apparatus after lifting the yaw bedplate;
Fig. 5 shows the yaw turning apparatus during turning the yaw bedplate;
Fig. 6 shows the yaw turning apparatus after turning the yaw bedplate;
Fig. 7 shows the yaw turning apparatus after lowering the yaw bedplate;
Fig. 8 shows the yaw bedplate and views of a docking device;
Fig. 9 shows a beam in a detailed view;
Fig. 10 shows a detail of the beam;
Fig. 11 is a side view of the yaw bedplate arranged on a wagon;
Figs. 12 and 13 show details of a cradle member of the wagon;
Fig. 14 shows the yaw bedplate and the beams during rotating the same; and
Figs. 15 and 16 show details of the yaw bedplate and the beams during rotating the same.

In the drawings, like reference numerals refer to like objects throughout. Objects in the diagrams are not necessarily drawn to scale.

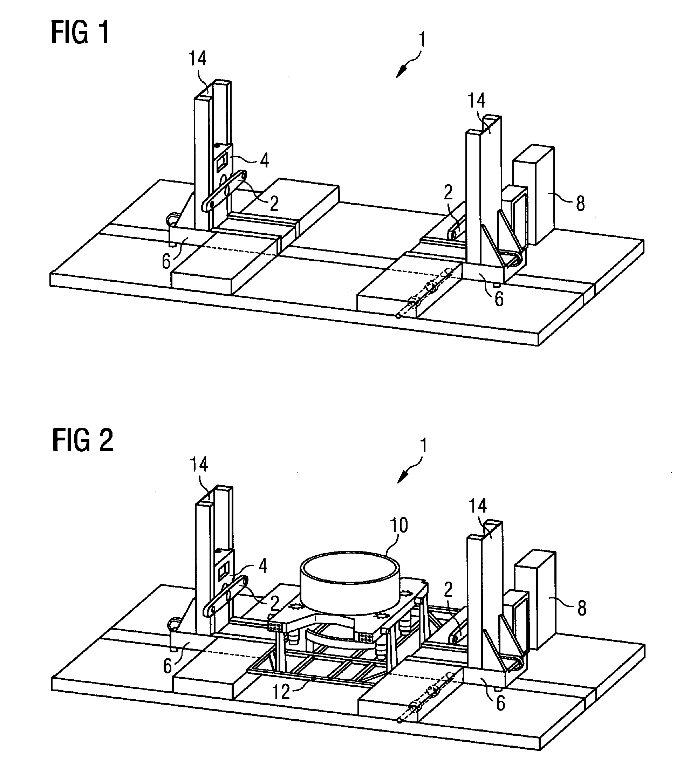

Figure 1 shows a perspective view of a yaw turning apparatus 1. The yaw turning apparatus 1 comprises two carriages 6 that may be moved in the horizontal direction. On each carriage 6 a lifting device 14 is arranged. The lifting device 14 can lift, move, push etc. a turning device 4 in the vertical direction. On the turning device 4 a beam 2 is arranged.

The yaw turning apparatus 1 further comprises a control unit 8. The control unit 8 controls the operation of the carriages 6, the lifting devices 14 and the turning devices 4. The carriages 6, the lifting devices 14 and the turning devices 4 may be controlled and/or driven by hydraulic pressure, pneumatic pressure and/or electric current. Accordingly, the carriages 6, the lifting devices 14 and/or the turning devices 4 may comprise a hydraulic cylinder, a pneumatic cylinder and/or an electric motor. The person skilled in the art of industrial automation knows how to control these actors. For the sake of brevity, a detailed explanation of the control of the actors is therefore omitted.

Figure 2 shows the yaw turning apparatus in such a state in which a yaw bedplate 10 arranged on a wagon 12 is positioned within the yaw turning apparatus 1. The first side of the yaw bedplate 10 is directed in the upward direction. Components may have been assembled on the first side of the yaw bedplate.

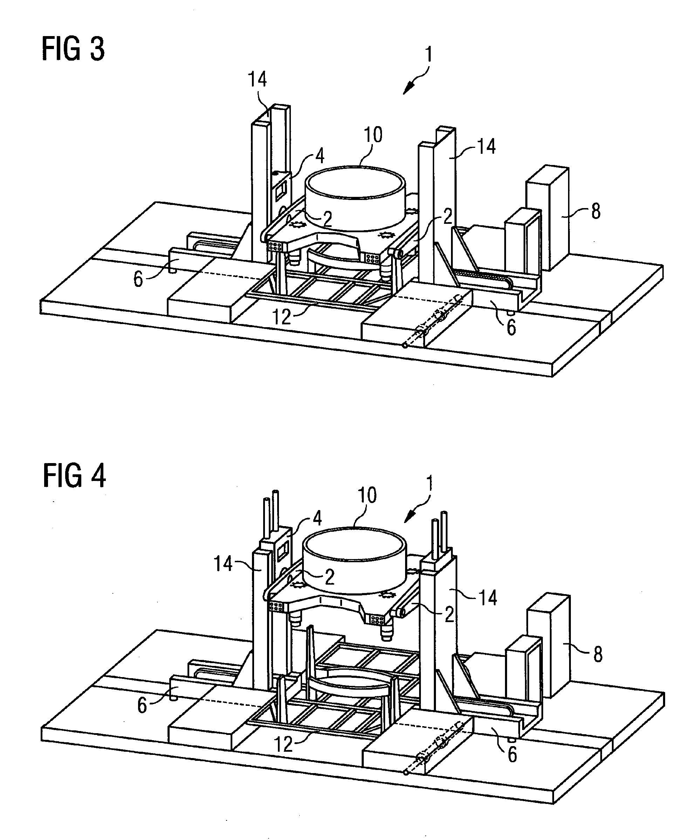

Figure 3 shows the yaw handling apparatus 1 in a position, in which the beams 2 engage the yaw bedplate 10 after the carriages 6 have been moved horizontally to the yaw bedplate 10. In the described embodiment of the invention, the carriages 6 and/or the beams 2 form the docking device. The yaw bedplate 10 is now held by the beams 2 being part of the docking device.

Figure 4 shows the yaw handling apparatus 1 in a state after the lifting device 14 has lifted the yaw bedplate 10 upward in the vertical direction.

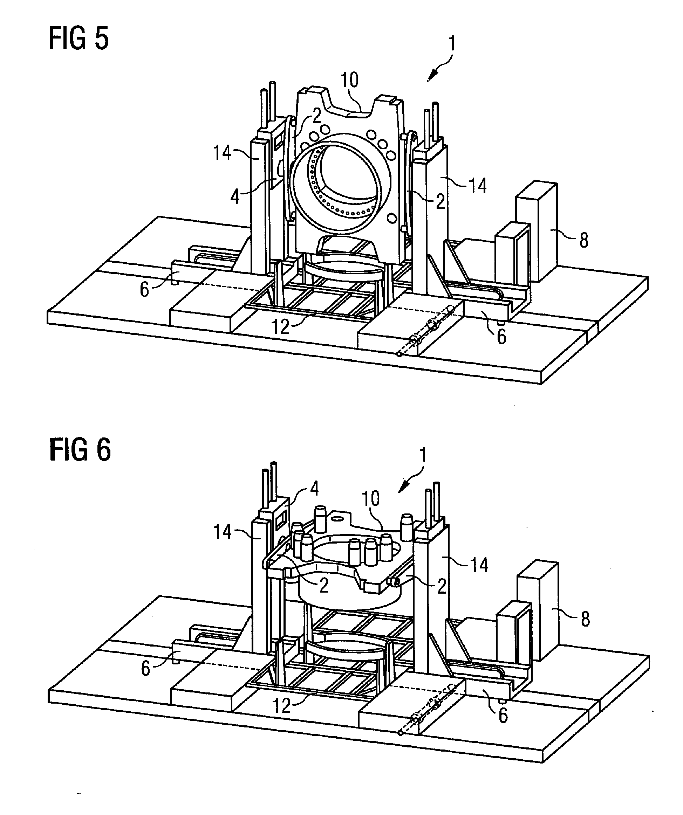

Figure 5 shows a state in which the turning device 4 has turned the yaw bedplate 10 90° about a horizontal axis.

Figure 6 shows the yaw handling apparatus 1 after the turning device 4 has turned the yaw bedplate 10 180° upside down. The second side of the yaw bedplate 10 faces upwards.

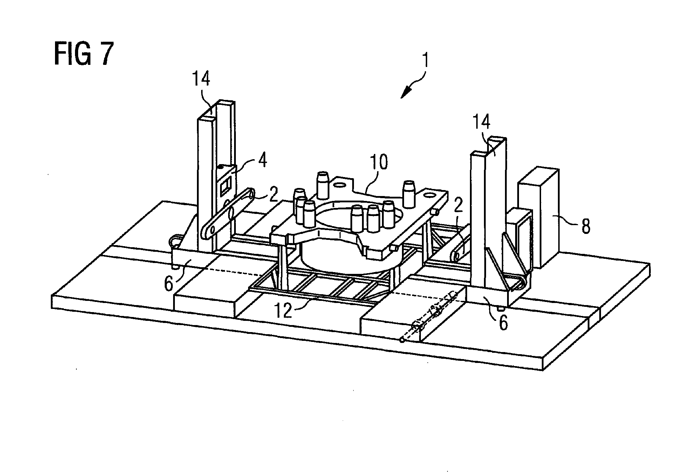

Figure 7 shows the final state after the lifting devices 14 lowered or lift down the yaw bedplate 10 to the initial vertical position on the wagon 12. The carriages 6 and the beams 2, and thus the docking device have been withdrawn in the horizontal direction from the yaw bedplate 10.

The yaw bedplate has been turned upside down by the apparatus and method according to the present invention, and manufacturing may continue by assembling further components to the second side, which is now directed into the upward direction. It is to be understood that the yaw turning apparatus can rotate the yaw bedplate 10 in any orientation, i.e. after assembling the second side of the yaw bedplate. The yaw turning apparatus 1 may be used to bring the yaw bedplate 1 back in an orientation, in which the first side of the yaw bedplate faces in the upward direction.

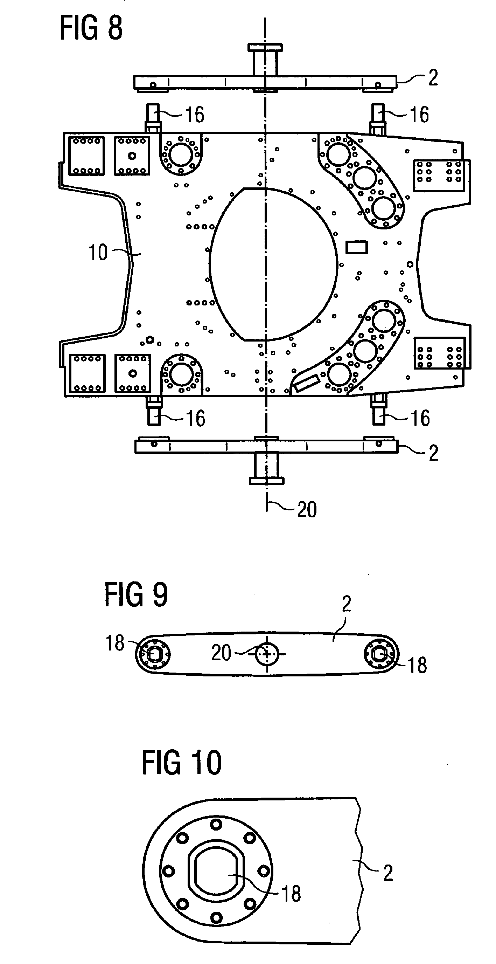

Figure 8 shows details of the docking apparatus. Pins 16 are mounted, i.e. by screwing, on or into the yaw bedplate 10. The pins 16 are an auxiliary structure used during manufacturing and assembling the yaw bedplate. The pins minimize the pick-up and lay-down time of the yaw bedplate 10 from/into the wagon 12. The pins can also co-operate with a fork lift of a fork-lift truck in order to lift and transport the yaw bedplate during manufacturing. The pins 16 ensure that the yaw bedplate is accessible from both sides, since no support structure contacts the bedplate 10. The pins 16 can co-operate with any lifting equipment. The pins ensure that the bedplate is positioned in the wagon in a more or less reproducible position, as required for automation and moving the yaw bedplate in a production process. Figure 8 also shows two beams 2, which are approaching the yaw bedplate in the horizontal direction in order to engage the pins 16. Preferably, the pins 16 are arranged symmetrical to the horizontal turning axis 20 of the turning devices.

Figure 9 shows a side view of the beam 2. Preferably, two openings 18 are arranged symmetrically to the turning axis 20 of the beam.

Figure 10 shows a further detail of the opening 18 of the beam 2. Preferably, the opening 18 has an oval shape in order to accommodate tolerances. The oval shape of the opening 18 may be formed such that the longer axis of the oval extends in the vertical or horizontal direction. One of the openings 18 of the beam 2 may be formed such that the longer axis of the oval extends in the vertical direction, whereas the other opening is formed such that the longer axis of the oval extends in the horizontal direction. Alternatively, both openings may be configured such that the longer axis of the oval extends in the vertical direction.

The openings 18 of the beams engage the pins 16, when the beam 2 is moved by a carriage 6 to the yaw bedplate 10. When the beam 2 engages the pins 16, one pin 16 is positioned in one of the openings 18, whereas the other pin 16 on the same side of the yaw bedplate 10 is positioned in the other opening 18 of the beam 2. In order to accommodate tolerances it is preferred that the opening 18 comprises a larger diameter than the pin 16.

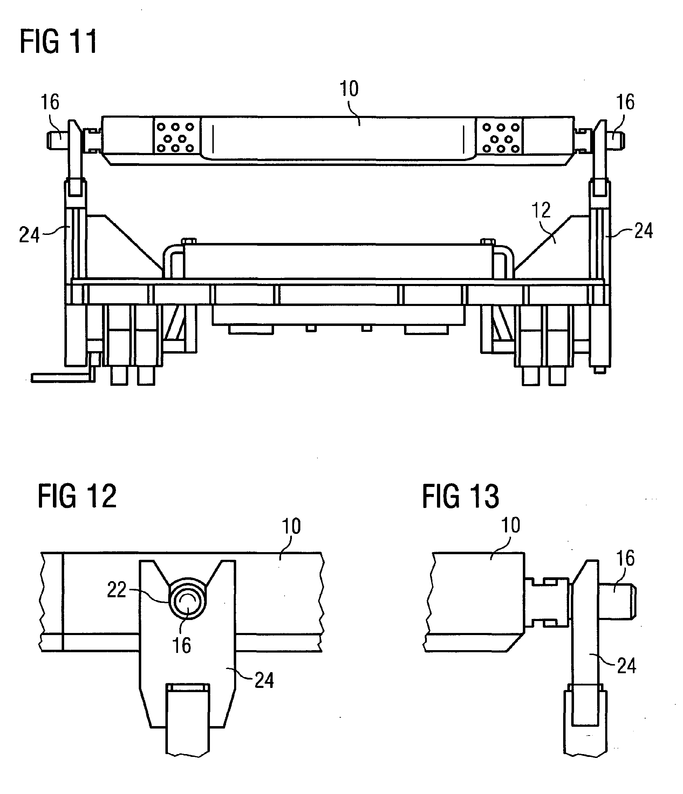

Figure 11 shows a front view of a wagon 12 on which a yaw bedplate 10 is positioned. The wagon 12 comprises a plurality of arms including a cradle or fork portion 24 on which the pins 16 are positioned. The arms or cradle elements 24 support the yaw bedplate 10 via the pins 16.

Figures 12 and 13 show more details of the arms of the wagon 12. Each arm comprises one fork or cradle element 24 in which one pin 16 that is mounted to the yaw bedplate 10 is positioned. The fork element 24 comprises an essentially V-shaped upper portion in order to center a pin 16 with respect to the arm. A lower portion 22 of the cradle element 24 comprises an essentially U-shaped portion in order to grip the pin 16 and thus the yaw bedplate 10 in its position such that the yaw bedplate 10 is arranged at a more or less known and reproducible position with respect to a working machine.

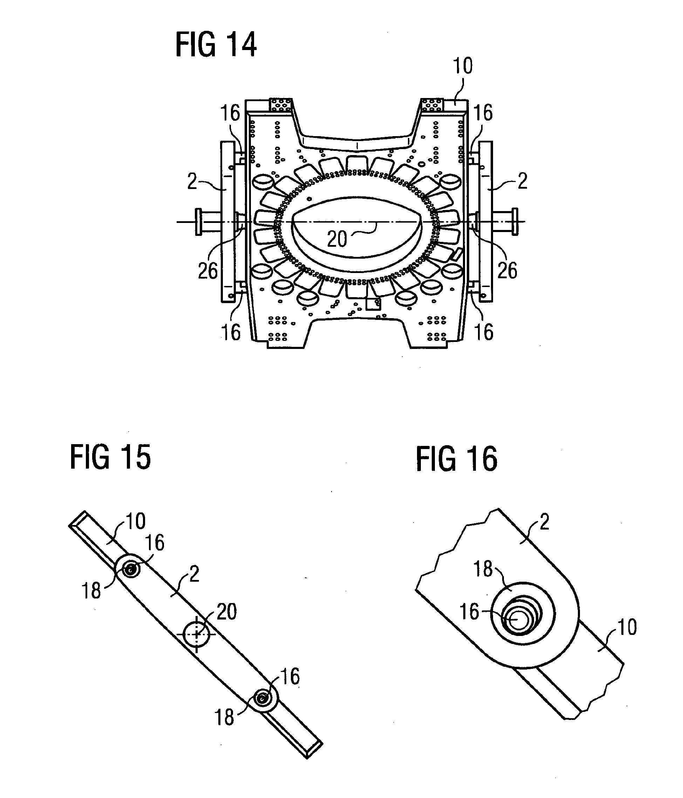

Figure 14 shows further details of the process for turning the yaw bedplate 10. The beams 2 engage the pins 16 in order to grip the yaw bedplate 10. Optional spacers 26 ensuring that the beams 2 are positioned in the correct manner with respect to the yaw bedplate 10 are arranged on the beams. The spacer 26 may comprise at its end portion a sensor (not shown) indicating the control unit 8 (see Figure 2) that the spacer 26 contacts the bedplate 10. Figure 14 shows the yaw bedplate 10 in a state in which it was rotated approximately 45° about the horizontal turning axis 20.

Figures 15 and 16 show further details of the interaction of the pins 16 and openings 18 during rotating the yaw bedplate 10. Also figures 15 and 16 show the yaw bedplate 10 and the beam 2 in a state after the yaw bedplate has been rotated approximately 45°. The pins 16 are arranged in the openings 18 of the beam 2. Figure 16 shows that the pin 16 can move slightly within the opening 18, since the pin 16 has a smaller diameter than the opening 18 and the opening 18 has an oval shape. Thereby, tolerances can be accommodated.

The present invention provides a wind turbine component handling apparatus that can rotate safely heavy and bulky components of a wind turbine during manufacturing the same. The inventive wind turbine component turning apparatus does not require in an automatic operation mode any interaction with the operator as required by a crane-based system. The wind turbine component apparatus can be operated automatically. Further, the inventive wind turbine component turning system fulfils higher safety standards.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. A "unit" or "module" can comprise a number of units or modules, unless otherwise stated.

## Claims

1. Wind turbine component handling apparatus (1), realized to rotate a yaw bedplate (10), comprising:
- two carriages (6) that may be moved in the horizontal direction;
- a docking device (2) realized to be essentially horizontally movable relative to the yaw bedplate (10) and to grip the yaw bedplate (10);
- a lifting device (14) arranged on a carriage (6), realized to essentially vertically lift the yaw bedplate (10); and
- a turning device (4) realized to rotate the docking device (2) (10) essentially about a horizontal axis (20), which turning device (4) is mounted on the lifting device (14).

2. Wind turbine component handling apparatus (1), further comprising a controller that is adapted to instruct the docking device (2) to move essentially horizontally relative to the yaw bedplate (10) and to grip the yaw bedplate (10), to instruct the lifting device (14) to lift the yaw bedplate (10) essentially vertically in the upward direction, and to instruct the turning device (4) to rotate the yaw bedplate (10) essentially about a horizontal axis.

3. Wind turbine component handling apparatus (1) according to claim 1, wherein the docking device (2) comprises two beams (2) arranged on opposite sides of the yaw bedplate (10), each beam (2) having at least one engaging portion (18) adapted to engage a complementary engaging portion of the yaw bedplate or of an auxiliary structure (16) coupled to the yaw bedplate.

4. Wind turbine component handling apparatus (1) according to claim 3, wherein the engaging portion is formed by an opening (18), preferably having an oval shape.

5. Wind turbine component handling apparatus (1) according to any of claims 1 to 4, wherein the turning device (4) is realized to rotate the docking device (2) and the yaw bedplate (10) coupled thereto essentially about a horizontal axis (20).

6. Wind turbine component handling apparatus (1) according to any of claims 1 to 5, wherein the lifting device (14) is realized to lift the docking device (2) and the yaw bedplate (10) coupled thereto essentially in a vertical direction.

7. Wind turbine component handling apparatus (1) according to any of claims 3 to 6, wherein each beam (2) comprises at least two openings (18), wherein each opening is realized to engage a pin (16) coupled to the yaw bedplate (10) in order to grip the yaw bedplate (10) in a fixed position with respect to the docking device (2).

8. Wind turbine component handling apparatus (1) according to any of claims 3 to 7, wherein each beam comprises at least one spacer (26) arranged on a side wall of the beam (2) facing the yaw bedplate (10).

9. Wind turbine manufacturing system, comprising
- the wind turbine component handling apparatus (1) according to any one of claims 1 to 8 for turning a yaw bedplate (10), and
- a support apparatus (12) having at least one cradle element (24), wherein an auxiliary structure (16) is positioned in a respective cradle element and wherein a respective auxiliary structure (16) is coupled with the yaw bedplate (10).

10. Wind turbine manufacturing system according to claim 9, wherein the support apparatus (12) is movable.

11. Method for handling a yaw bedplate (10) of a wind turbine, comprising the following steps:
- gripping the yaw bedplate (10) by a docking device (2), which docking device (2) is realized to be essentially horizontally movable relative to the yaw bedplate (10);
- lifting the yaw bedplate (10) by a lifting device (14) realized to essentially vertically lift the yaw bedplate (10); and
- rotating the yaw bedplate (10) essentially about a horizontal axis (20) by a turning device (4) mounted on the lifting device (14).

12. Method for handling a wind turbine component (10) according to claim 11, comprising the following steps:
- mounting a plurality of pins (16) to the yaw bedplate (10);
- positioning the yaw bedplate (10) on a support apparatus (12) such that each pin (16) rests in a cradle element (24) of the support apparatus (12);
- wherein the step of gripping comprises moving the docking device (2) essentially in the horizontal direction such that openings (18) in the docking device (2) engage the pins (16) mounted to the yaw bedplate (10);
- wherein the step of lifting comprises lifting the docking device (2)and wherein the yaw bedplate (10) is lifted by the pins (16) mounted to the yaw bedplate (10);
- wherein the step of rotating includes rotating the docking device(2) essentially about a horizontal axis and wherein the yaw bedplate (10) is turned about the horizontal axis by pins (16) mounted to the yaw bedplate (10); and
- lowering the docking device (2), until the pins (16) mounted to the yaw bedplate (10) rest in the respective one of the cradle elements (24) of the support apparatus (12).

## Patentansprüche

1. Vorrichtung (1) zur Handhabung eines Windenergieanlagenbauteils, welche dafür ausgelegt ist, eine Azimutsystem-Grundplatte (10) zu drehen, und umfasst:
- zwei Schlitten (6), welche in der horizontalen Richtung bewegt werden können;
- eine Andockvorrichtung (2), die dafür ausgelegt ist, im Wesentlichen horizontal beweglich bezüglich der Azimutsystem-Grundplatte (10) zu sein und die Azimutsystem-Grundplatte (10) zu greifen;
- eine Hubvorrichtung (14), die auf einem Schlitten (6) angeordnet ist und dafür ausgelegt ist, die Azimutsystem-Grundplatte (10) im Wesentlichen vertikal zu heben;
- eine Wendevorrichtung (4), die dafür ausgelegt ist, die Andockvorrichtung (2) (10) im Wesentlichen um eine horizontale Achse (20) zu drehen, wobei diese Wendevorrichtung (4) auf der Hubvorrichtung (14) angebracht ist.

2. Vorrichtung (1) zur Handhabung eines Windenergieanlagenbauteils, welche ferner eine Steuereinrichtung umfasst, die dazu eingerichtet ist, der Andockvorrichtung (2) die Anweisung zu erteilen, sich im Wesentlichen horizontal bezüglich der Azimutsystem-Grundplatte (10) zu bewegen und die Azimutsystem-Grundplatte (10) zu greifen, der Hubvorrichtung (14) die Anweisung zu erteilen, die Azimutsystem-Grundplatte (10) im Wesentlichen vertikal nach oben zu heben, und der Wendevorrichtung (4) die Anweisung zu erteilen, die Azimutsystem-Grundplatte (10) im Wesentlichen um eine horizontale Achse zu drehen.

3. Vorrichtung (1) zur Handhabung eines Windenergieanlagenbauteils nach Anspruch 1, wobei die Andockvorrichtung (2) zwei Träger (2) umfasst, die auf einander gegenüberliegenden Seiten der Azimutsystem-Grundplatte (10) angeordnet sind, wobei jeder Träger (2) wenigstens einen Eingriffsabschnitt (18) aufweist, der dazu eingerichtet ist, mit einem komplementären Eingriffsabschnitt der Azimutsystem-Grundplatte oder einer mit der Azimutsystem-Grundplatte gekoppelten Hilfsstruktur (16) in Eingriff zu gelangen.

4. Vorrichtung (1) zur Handhabung eines Windenergieanlagenbauteils nach Anspruch 3, wobei der Eingriffsabschnitt von einer Öffnung (18) gebildet wird, die vorzugsweise eine ovale Form hat.

5. Vorrichtung (1) zur Handhabung eines Windenergieanlagenbauteils nach einem der Ansprüche 1 bis 4, wobei die Wendevorrichtung (4) dafür ausgelegt ist, die Andockvorrichtung (2) und die mit dieser gekoppelte Azimutsystem-Grundplatte (10) im Wesentlichen um eine horizontale Achse (20) zu drehen.

6. Vorrichtung (1) zur Handhabung eines Windenergieanlagenbauteils nach einem der Ansprüche 1 bis 5, wobei die Hubvorrichtung (14) dafür ausgelegt ist, die Andockvorrichtung (2) und die mit dieser gekoppelte Azimutsystem-Grundplatte (10) im Wesentlichen in einer vertikalen Richtung zu heben.

7. Vorrichtung (1) zur Handhabung eines Windenergieanlagenbauteils nach einem der Ansprüche 3 bis 6, wobei jeder Träger (2) wenigstens zwei Öffnungen (18) umfasst, wobei jede Öffnung dafür ausgelegt ist, dass ein mit der Azimutsystem-Grundplatte (10) gekoppelter Zapfen (16) in sie eingreift, um die Azimutsystem-Grundplatte (10) in einer festen Position bezüglich der Andockvorrichtung (2) zu greifen.

8. Vorrichtung (1) zur Handhabung eines Windenergieanlagenbauteils nach einem der Ansprüche 3 bis 7, wobei jeder Träger wenigstens ein Distanzstück (26) umfasst, das auf einer der Azimutsystem-Grundplatte (10) zugewandten Seitenwand des Trägers (2) angeordnet ist.

9. Windenergieanlagen-Herstellungssystem, welches umfasst:
- die Vorrichtung (1) zur Handhabung eines Windenergieanlagenbauteils nach einem der Ansprüche 1 bis 8 zum Wenden einer Azimutsystem-Grundplatte (10), und
- eine Stützvorrichtung (12), die wenigstens ein Aufnahmeelement (24) aufweist, wobei eine Hilfsstruktur (16) in einem jeweiligen Aufnahmeelement positioniert ist und wobei eine jeweilige Hilfsstruktur (16) mit der Azimutsystem-Grundplatte (10) gekoppelt ist.

10. Windenergieanlagen-Herstellungssystem nach Anspruch 9, wobei die Stützvorrichtung (12) beweglich ist.

11. Verfahren zur Handhabung einer Azimutsystem-Grundplatte (10) einer Windenergieanlage, welches die folgenden Schritte umfasst:
- Greifen der Azimutsystem-Grundplatte (10) durch eine Andockvorrichtung (2), wobei diese Andockvorrichtung (2) dafür ausgelegt ist, im Wesentlichen horizontal beweglich bezüglich der Azimutsystem-Grundplatte (10) zu sein;
- Heben der Azimutsystem-Grundplatte (10) durch eine Hubvorrichtung (14), die dafür ausgelegt ist, die Azimutsystem-Grundplatte (10) im Wesentlichen vertikal zu heben; und
- Drehen der Azimutsystem-Grundplatte (10) im Wesentlichen um eine horizontale Achse (20) durch eine Wendevorrichtung (4), die auf der Hubvorrichtung (14) angebracht ist.

12. Verfahren zur Handhabung eines Windenergieanlagenbauteils (10) nach Anspruch 11, welches die folgenden Schritte umfasst:
- Anbringen mehrerer Zapfen (16) an der Azimutsystem-Grundplatte (10);
- Positionieren der Azimutsystem-Grundplatte (10) auf einer Stützvorrichtung (12), so dass jeder Zapfen (16) in einem Aufnahmeelement (24) der Stützvorrichtung (12) ruht;
- wobei der Schritt des Greifens das Bewegen der Andockvorrichtung (2) im Wesentlichen in der horizontalen Richtung umfasst, derart, dass Öffnungen (18) in der Andockvorrichtung (2) mit den Zapfen (16) in Eingriff gelangen, die an der Azimutsystem-Grundplatte (10) angebracht sind;
- wobei der Schritt des Hebens das Heben der Andockvorrichtung (2) umfasst, und wobei die Azimutsystem-Grundplatte (10) an den Zapfen (16) gehoben wird, die an der Azimutsystem-Grundplatte (10) angebracht sind;
- wobei der Schritt des Drehens das Drehen der Andockvorrichtung (2) im Wesentlichen um eine horizontale Achse umfasst, und wobei die Azimutsystem-Grundplatte (10) an Zapfen (16) um die horizontale Achse gedreht wird, die an der Azimutsystem-Grundplatte (10) angebracht sind; und
- Absenken der Andockvorrichtung (2), bis die an der Azimutsystem-Grundplatte (10) angebrachten Zapfen (16) in dem jeweiligen von den Aufnahmeelementen (24) der Stützvorrichtung (12) ruhen.

## Revendications

1. Appareil (1) de manipulation de composants d'éolienne, réalisé pour faire tourner une plaque de base (10), comprenant :
- deux chariots (6) qui peuvent être déplacés dans le sens horizontal ;
- un dispositif de réception (2) réalisé pour être mobile sensiblement horizontalement par rapport à la plaque de base de lacet (10) et pour agripper la plaque de base de lacet (10) ;
- un dispositif de levage (14) agencé sur un chariot (6), réalisé pour lever sensiblement verticalement la plaque de base de lacet (10) ; et
- un dispositif de rotation (4) réalisé pour faire tourner le dispositif de réception (2) (10) sensiblement autour d'un axe horizontal (20), lequel dispositif de rotation (4) est monté sur le dispositif de levage (14).

2. Appareil (1) de manipulation de composants d'éolienne, comprenant en outre un contrôleur qui est adapté à ordonner au dispositif de réception (2) de se déplacer sensiblement horizontalement par rapport à la plaque de base de lacet (10) et d'agripper la plaque de base de lacet (10), à ordonner au dispositif de levage (14) de lever la plaque de base de lacet (10) sensiblement verticalement dans le sens vers le haut, et à ordonner au dispositif de rotation (4) de faire tourner la plaque de base de lacet (10) sensiblement autour d'un axe horizontal.

3. Appareil (1) de manipulation de composants d'éolienne selon la revendication 1, dans lequel le dispositif de réception (2) comprend deux poutres (2) agencées sur des côtés opposés de la plaque de base de lacet (10), chaque poutre (2) ayant au moins une partie d'engagement (18) adaptée à engager une partie d'engagement complémentaire de la plaque de base de lacet ou d'une structure auxiliaire (16) couplée à ls plaque de base de lacet.

4. Appareil (1) de manipulation de composants d'éolienne selon la revendication 3, dans lequel la partie d'engagement est formée par une ouverture (18), préférablement ayant une forme ovale.

5. Appareil (1) de manipulation de composants d'éolienne selon l'une quelconque des revendications 1 à 4, dans lequel le dispositif de rotation (4) est réalisé pour faire tourner le dispositif de réception (2) et la plaque de base de lacet (10) couplé à celui-ci sensiblement autour d'un axe horizontal (20).

6. Appareil (1) de manipulation de composants d'éolienne selon l'une quelconque des revendications 1 à 5, dans lequel le dispositif de levage (14) est réalisé pour lever le dispositif de réception (2) et la plaque de base de lacet (10) couplé à celui-ci sensiblement dans un sens vertical.

7. Appareil (1) de manipulation de composants d'éolienne selon l'une quelconque des revendications 3 à 6, dans lequel chaque poutre (2) comprend au moins deux ouvertures (18), dans lequel chaque ouverture est réalisée pour engager une broche (16) couplée à la plaque de base de lacet (10) afin d'agripper la plaque de base de lacet (10) dans une position fixe par rapport au dispositif de réception (2).

8. Appareil (1) de manipulation de composants d'éolienne selon l'une quelconque des revendications 3 à 7, dans lequel chaque poutre comprend au moins un espaceur (26) agencé sur une paroi latérale de la poutre (2) faisant face à la plaque de base de lacet (10).

9. Système de fabrication d'éolienne, comprenant :
- l'appareil (1) de manipulation de composants d'éolienne selon l'une quelconque des revendications 1 à 8 pour faire tourner une plaque de base de lacet (10), et
- un appareil de support (12) ayant au moins un élément de berceau (24), dans lequel une structure auxiliaire (16) est positionnée dans un élément de berceau respectif et dans lequel une structure auxiliaire (16) respective est couplée avec la plaque de base de lacet (10).

10. Système de fabrication d'éolienne selon la revendication 9, dans lequel l'appareil de support (12) est mobile.

11. Procédé de manipulation d'une plaque de base de lacet (10) d'une éolienne, comprenant les étapes suivantes :
- préhension de la plaque de base de lacet (10) par un dispositif de réception (2), lequel dispositif de réception (2) est réalisé pour être mobile sensiblement horizontalement par rapport à la plaque de base de lacet (10) ;
- levage de la plaque de base de lacet (10) par un dispositif de levage (14) réalisé pour lever sensiblement verticalement la plaque de base de lacet (10) ; et
- rotation de la plaque de base de lacet (10) sensiblement autour d'un axe horizontal (20) par un dispositif de rotation (4) monté sur le dispositif de levage (14).

12. Procédé de manipulation d'un composant (10) d'éolienne selon la revendication 11, comprenant les étapes suivantes :
- montage d'une pluralité de broches (16) sur la plaque de base de lacet (10) ;
- positionnement de la plaque de base de lacet (10) sur un appareil de support (12) de telle manière que chaque broche (16) repose dans un élément de berceau (24) de l'appareil de support (12) ;
- dans lequel l'étape de préhension comprend le déplacement du dispositif de réception (2) sensiblement dans le sens horizontal de telle manière que des ouvertures (18) dans le dispositif de réception (2) engagent les broches (16) montées sur la plaque de base de lacet (10) ;
- dans lequel l'étape de levage comprend le levage du dispositif de réception (2) et dans lequel la plaque de base de lacet (10) est levé par les broches (16) montées sur la plaque de base de lacet (10) ;
- dans lequel l'étape de rotation inclut la rotation du dispositif de réception (2) sensiblement autour d'un axe horizontal et dans lequel la plaque de base de lacet (10) est tourné autour de l'axe horizontal par des broches (16) montées sur la plaque de base de lacet (10) ; et
- abaissement du dispositif de réception (2), jusqu'à ce que les broches (16) montées sur la plaque de base de lacet (10) reposent dans celui respectif des éléments de berceau (24) de l'appareil de support (12).
